# FASCICULE DE BREVET EUROPEEN

(11) **EP 2 108 432 B1**
(45) Date de publication et mention de la délivrance du brevet: **30.06.2010**
(21) Numéro de dépôt: 09155750.4
(22) Date de dépôt: 20.03.2009
(51) Int. Cl.: B01D 46/10, B01D 46/52

(54) **Dispositif de filtration à moyens d'encliquetage**
Filtervorrichtung mit Einschnappmitteln
Filtering device with snap-fitting means

(30) Priorité: 11.04.2008 FR 0852437
(43) Date de publication de la demande: 14.10.2009
(73) Titulaire: Valeo Matériaux de Friction, 87020 Limoges (FR)
(72) Inventeur: Taccoen, Didier c/o Valéo Matériaux de Friction, 14700, Falaise (FR); Bidot, Johann c/o Valéo Matériaux de Friction, 14260, Campadre Valcongrain (FR)

(56) Documents cités:
- EP-A- 1 254 796
- DE-U1- 20 113 026
- FR-A- 2 812 379
- FR-A- 2 855 072

## Description

La présente invention concerne les dispositifs à filtration d'air. En particulier, mais non exclusivement, la présente invention concerne la filtration d'air circulant dans un véhicule automobile, notamment d'air climatisé, destiné à circuler dans l'habitacle du véhicule.

On connaît déjà dans l'état de la technique, notamment d'après EP-A-1 254 796, un dispositif de filtration d'air, du type comprenant un média filtrant s'étendant en accordéon de façon à présenter des plis dont chacun est délimité par deux pans adjacents du média filtrant convergeant vers une ligne de pliage qui s'étend dans une direction transversale.

Le dispositif comporte également deux parois longitudinales opposées de canalisation d'air, entre lesquelles le média filtrant s'étend dans la direction transversale, les deux parois longitudinales s'étendant sensiblement dans une direction longitudinale orthogonale à la direction transversale.

Un tel dispositif de filtration est destiné à être logé dans un boîtier de logement du véhicule automobile. Afin d'empêcher l'air de passer entre le dispositif de filtration et le boîtier de logement, on prévoit généralement des moyens d'étanchéité agencés entre ce dispositif de filtration et des parois du boîtier de logement.

Dans EP-A-1 254 796, le dispositif comporte des moyens de fixation du dispositif avec le boîtier de logement, destinés à assurer à la fois des fonctions de fixation du dispositif dans le boîtier et d'étanchéité.

Ces moyens de fixation comportent des languettes souples, ménagées sur le dispositif, susceptibles de coopérer avec des moyens de maintien complémentaires ménagés dans le boîtier de logement.

Les languettes souples sont habituellement ménagées sur un cadre du dispositif, ce cadre comprenant les parois longitudinales et entourant au moins partiellement le média filtrant. Ces languettes sont par exemples formées lors du moulage du cadre.

Ces languettes sont coûteuses et complexes à réaliser car elles nécessitent de prévoir un moule spécifique pour la réalisation du cadre et un boîtier de logement particulier.

L'invention a notamment pour but de remédier à ces inconvénients en fournissant un dispositif de filtration susceptible d'être fixé de manière étanche à un boîtier de logement, sans nécessiter d'opération de fabrication coûteuse ou complexe.

A cet effet, l'invention a pour objet un dispositif de filtration d'air, comprenant :
- un média filtrant s'étendant en accordéon de façon à présenter des plis dont chacun est délimité par deux pans adjacents du média filtrant convergeant vers une ligne de pliage qui s'étend dans une direction transversale,
- deux parois longitudinales opposées de canalisation d'air, entre lesquelles le média filtrant s'étend dans la direction transversale, les deux parois longitudinales s'étendant sensiblement dans une direction longitudinale orthogonale à la direction transversale,
- des moyens de fixation du dispositif avec un boîtier de logement de ce dispositif,
dans lequel les moyens de fixation comportent au moins un pli du média filtrant, dit pli d'encliquetage, faisant saillie des parois longitudinales dans une direction de mesure de hauteur orthogonale aux directions longitudinale et transversale.

Le pli qui fait saillie des parois longitudinales dans la direction de mesure de hauteur forme un élément mâle d'encliquetage, susceptible de coopérer avec un élément femelle d'encliquetage porté par le boîtier de logement.

Un tel pli d'encliquetage est simple et économique à réaliser. Par exemple, on peut réaliser les parois longitudinales de façon qu'une partie de chaque paroi ait une dimension inférieure à celle des plis dans la direction de mesure de hauteur.

On notera que, puisque l'encliquetage est assuré directement par un pli du média filtrant, on réalise un contact direct entre ce média filtrant et un élément du boîtier de logement. Ainsi, l'air ne peut pas passer entre ce média filtrant et cet élément du boîtier, ce qui permet de réaliser de manière simple une fonction d'étanchéité satisfaisante.

Un dispositif de filtration selon l'invention peut en outre comporter l'une ou plusieurs des caractéristiques suivantes.
- Le pli d'encliquetage est situé à une extrémité longitudinale du dispositif. L'encliquetage est en effet plus simple à réaliser si le pli d'encliquetage se trouve à l'extrémité longitudinale du dispositif. Par exemple, ce pli d'encliquetage est formé par le dernier pli du média filtrant dans une direction longitudinale.
- Chaque paroi longitudinale comprend un décrochement en hauteur séparant deux parties respectivement haute et basse de la paroi longitudinale, le pli d'encliquetage faisant saillie de la partie basse dans la direction de mesure de hauteur. Afin d'obtenir de telles parois, il suffit de mouler chaque paroi de façon qu'elle comporte deux parties, ou de découper une partie basse dans la paroi après qu'elle ait été réalisée. Une telle paroi est simple et économique à réaliser, et ne nécessite pas de changement substantiel dans une chaîne de montage d'un dispositif de filtration ne comportant pas de moyens de fixation.
- Les décrochements des parois longitudinales ont des positions longitudinales sensiblement identiques.
- La hauteur des plis du média filtrant est sensiblement constante, les lignes de pliage se répartissant en des premières lignes de pliage sensiblement coplanaires alternant chacune avec des secondes lignes de pliage sensiblement coplanaires, décalées en hauteur par rapport aux premières lignes de pliage. Ainsi, le dispositif selon l'invention comporte un média filtrant classique plié de manière conventionnelle.
- Les parties haute et basse de chaque paroi longitudinale forment des moyens formant détrompeur. Il est particulièrement avantageux de profiter du fait que les parois possèdent ces parties haute et basse pour réaliser une fonction de détrompage.
- Le média filtrant comprend des moyens de filtration de particules et/ou de gaz.

Le boîtier de logement du dispositif de filtration tel que défini précédemment comporte une cavité d'encliquetage délimitée par une paroi d'encliquetage de forme complémentaire à celle du pli d'encliquetage.

Un tel boîtier, complémentaire du dispositif de filtration précité, est simple à réaliser. Par exemple, il suffit de fixer dans le boîtier un élément d'encliquetage, portant une partie femelle d'encliquetage (formée par la cavité) complémentaire de la partie mâle (formée par le pli d'encliquetage). Il n'est donc pas nécessaire d'apporter des modifications substantielles à un boîtier classique.

De préférence, la paroi d'encliquetage est prolongée par une rampe de guidage du pli d'encliquetage vers la cavité d'encliquetage. Ainsi, l'insertion du pli d'encliquetage dans la cavité d'encliquetage est facilitée par cette rampe de guidage. Le dispositif de filtration peut ainsi être correctement positionné dans le boîtier, même dans le cas d'une fixation en aveugle, comme c'est souvent le cas pour l'insertion d'un dispositif de filtration dans un boîtier de logement d'une installation de circulation d'air de véhicule automobile.

L'invention sera mieux comprise à la lecture de la description qui va suivre, donnée uniquement à titre d'exemple et faite en se référant aux dessins annexés dans lesquels :
- la figure 1 est une vue en perspective d'un dispositif de filtration d'air selon un exemple de mode de réalisation de l'invention ;
- la figure 2 est une vue en perspective d'un détail du dispositif de la figure 1 ;
- la figure 3 est une vue en coupe longitudinale du dispositif de la figure 1 logé dans un boîtier de logement ;
- la figure 4 est une vue en perspective d'un élément d'encliquetage du boîtier de la figure 3.

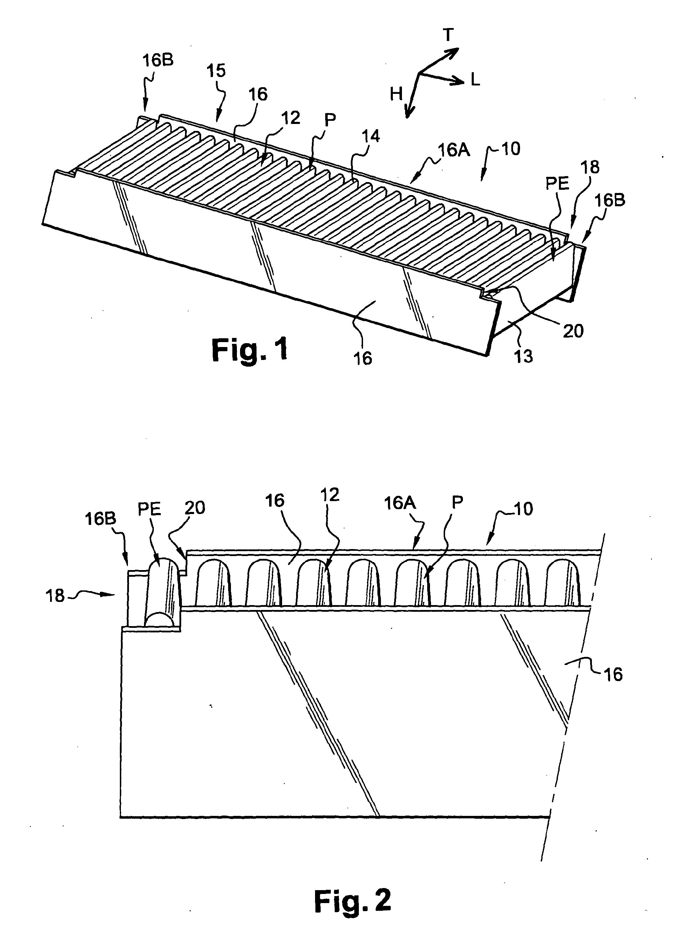

On a représenté sur les figures 1 et 2 un dispositif de filtration d'air selon un exemple de mode de réalisation de l'invention, désigné par la référence générale 10.

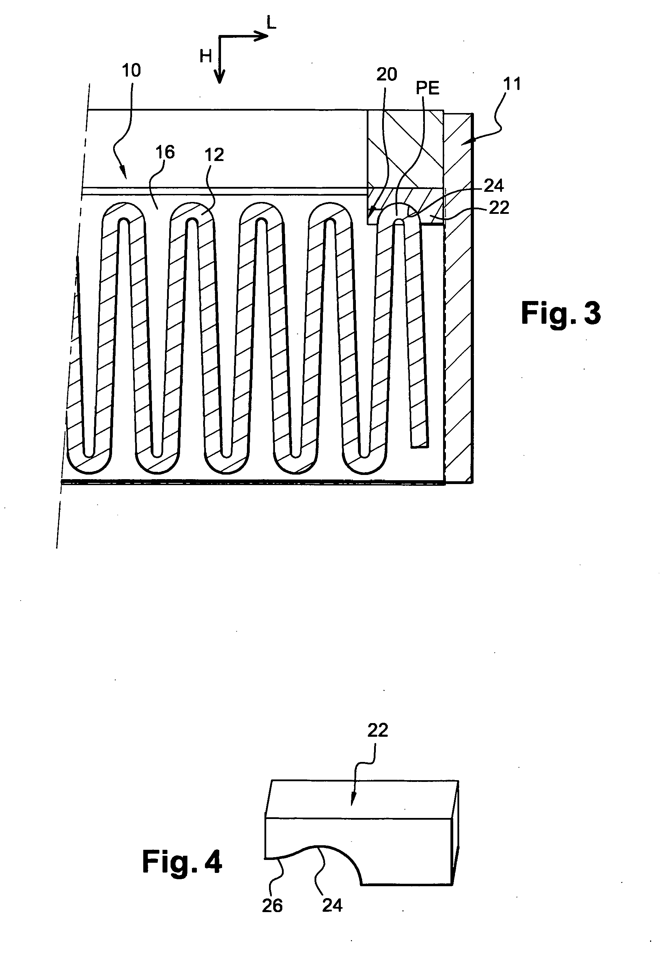

Le dispositif de filtration 10 est destiné, par exemple, à être agencé dans une installation de circulation d'air dans un véhicule automobile, afin notamment d'approvisionner un habitacle de ce véhicule en air climatisé ou non. A cet effet, le dispositif de filtration 10 est habituellement logé dans un boîtier 11, représenté sur la figure 3, agencé dans le corps du véhicule automobile.

Le dispositif de filtration 10 comporte un média filtrant 12 de type classique, plié en accordéon de façon à présenter des plis P dont chacun est délimité par deux pans 13 adjacents du média filtrant 12 convergeant vers une ligne de pliage 14 s'étendant dans une direction T, dite transversale.

Le média filtrant 12 est constitué par exemple d'un matériau multicouche porté, le cas échéant, par des grilles non représentées. Le média filtrant 12 comporte avantageusement des moyens de filtration de particules et/ou de gaz. Par exemple, le média filtrant 12 comporte du charbon actif en grain.

Le média filtrant 12 est relié à un support 15 comportant deux parois planes 16 opposées de canalisation d'air, sensiblement parallèles, entre lesquelles le média filtrant 12 s'étend dans la direction transversale T. Les parois 16 sont destinées à canaliser l'air à travers le média filtrant 12. De préférence, les parois 16 sont en mousse polypropylène.

Les parois 16 sont dites longitudinales et s'étendent sensiblement dans une direction L orthogonale à la direction transversale T, dite direction longitudinale L.

Dans ce qui suit, on définit également une direction H, orthogonale aux directions longitudinales L et transversale T, dite direction de mesure de hauteur H.

Les parois longitudinales 16 sont munies chacune d'une face interne reliée au média filtrant 12, par exemple par une soudure thermique sans apport de matière. Une telle soudure thermique est réalisée par une opération classique de soudage miroir ou par rayonnement infra-rouge.

De manière optionnelle, le support 15 peut comporter deux parois planes opposées de canalisation d'air, sensiblement parallèles entre elles et perpendiculaires aux parois longitudinales 16, entre lesquelles le média filtrant 12 s'étend longitudinalement, dites parois transversales. Dans ce cas, le support 15 forme un cadre entourant le média filtrant 12.

On notera que l'air, canalisé par les parois de canalisation, s'écoule généralement à travers le média filtrant 12 dans une direction contenue dans un plan (H, T) défini par les directions transversale T et de mesure de hauteur H.

Le dispositif de filtration 10 s'étend dans la direction longitudinale L entre deux extrémités longitudinales, dont au moins l'une, de préférence les deux extrémités, comporte des moyens 18 de fixation du dispositif dans le boîtier de logement 11.

Les moyens de fixation 18, représentés plus particulièrement sur la figure 2, comportent un pli du média filtrant 12, dit pli d'encliquetage PE, faisant saillie de chaque paroi longitudinale 16 dans la direction de mesure de hauteur H. De préférence, le pli d'encliquetage PE est le dernier pli du média filtrant dans la direction longitudinale L.

Comme cela est représenté sur les figures 1 et 2, chaque paroi longitudinale 16 comporte au moins un décrochement en hauteur 20 séparant deux parties 16A, 16B de hauteurs différentes de la paroi 16, dites haute et basse. Les décrochements 20 des deux parois longitudinales 16 ont de préférence des positions longitudinales sensiblement identiques. En effet, les parois longitudinales 16 sont de préférences identiques, de sorte que le pli d'encliquetage PE fait saillie des parties basses 16B de chaque paroi longitudinale 16, dans la direction H de mesure de hauteur.

Dans l'exemple représenté, chaque paroi 16 comporte deux parties basses 16B, chacune située à une extrémité longitudinale de la paroi 16.

Ces parties haute 16A et basse 16B de chaque paroi 16 sont par exemple formées lors du moulage de cette paroi 16. En variante, chaque partie basse 16B peut être formée par découpage dans la paroi 16.

On notera que le média filtrant 12 est plié en accordéon de manière classique. En d'autres termes, la hauteur des plis P du média filtrant 12 est sensiblement constante, et les lignes de pliage 14 se répartissent en des premières lignes de pliage sensiblement coplanaires alternant chacune avec des secondes lignes de pliage sensiblement coplanaires, décalées en hauteur par rapport aux premières lignes de pliage.

Ainsi, le pli d'encliquetage PE est réalisé en dimensionnant chaque partie basse 16B de la paroi de façon que ce pli d'encliquetage PE fasse saillie de chaque partie basse 16B dans la direction de mesure de hauteur H.

De préférence, les parties haute 16A et basse 16B des parois longitudinales forment des moyens formant détrompeur.

On a représenté sur la figure 3 le dispositif de filtration 10 logé dans le boîtier de logement 11.

Le boîtier de logement 11 comporte un élément d'encliquetage 22, représenté plus en détail sur la figure 4, rapporté sur ce boîtier 11 ou venu de moulage avec celui ci.

L'élément d'encliquetage 22 comporte une cavité d'encliquetage 24 délimitée par une paroi d'encliquetage de forme complémentaire à celle du pli d'encliquetage PE. Ainsi, le pli d'encliquetage PE forme une partie mâle d'encliquetage, et la cavité 24 forme une partie femelle d'encliquetage complémentaire.

L'élément d'encliquetage 22 est fixé de manière étanche sur le boîtier de logement 11, par exemple par soudure, et surplombe le média filtrant 12 lorsque le pli d'encliquetage PE est encliqueté dans cet élément 22, comme cela est représenté sur la figure 3. Ainsi, l'air destiné à être filtré ne peut pas passer entre le média filtrant et le boîtier 11, mais ne passe qu'à travers le média filtrant 12. On réalise ainsi une fonction d'étanchéité efficace.

De préférence, la paroi d'encliquetage est prolongée par une rampe 26 de guidage du pli d'encliquetage PE vers la cavité d'encliquetage 24. Cette rampe de guidage 26 facilite l'encliquetage du pli d'encliquetage PE dans la cavité d'encliquetage 24.

On notera enfin que l'invention n'est pas limitée au mode de réalisation précédemment décrit.

En effet, en variante, la hauteur des parois longitudinales pourrait être constante le long du dispositif de filtration 10, le média étant alors plié de façon que la hauteur du pli d'encliquetage PE soit supérieure à la hauteur des autres plis P, de façon à faire saillie des parois longitudinales dans la direction de mesure de hauteur.

## Revendications

1. Dispositif (10) de filtration d'air comprenant:
- un média filtrant (12) s'étendant en accordéon de façon à présenter des plis (P, PE) dont chacun est délimité par deux pans adjacents du média filtrant (12) convergeant vers une ligne de pliage (14) qui s'étend dans une direction transversale (T),
- deux parois longitudinales opposées (16) de canalisation d'air, entre lesquelles le média filtrant (12) s'étend dans la direction transversale, les deux parois longitudinales (16) s'étendant sensiblement dans une direction longitudinale (L) orthogonale à la direction transversale (T),
- des moyens (18) de fixation du dispositif avec un boîtier (11) de logement de ce dispositif (10),
**caractérisé en ce que**
les moyens de fixation (18) comportent au moins un pli du média filtrant (12), dit pli d'encliquetage (PE), faisant saillie des parois longitudinales (16) dans une direction de mesure de hauteur (H) orthogonale aux directions longitudinale et transversale.

2. Dispositif de filtration d'air (10) selon la revendication 1, dans lequel le pli d'encliquetage (PE) est situé à une extrémité longitudinale du dispositif (10).

3. Dispositif de filtration d'air (10) selon la revendication 1 ou 2, dans lequel chaque paroi longitudinale (16) comprend un décrochement en hauteur (20) séparant deux parties respectivement haute (16A) et basse (16B) de la paroi longitudinale (16), le pli d'encliquetage (PE) faisant saillie de la partie basse (16B) dans la direction de mesure de hauteur (H).

4. Dispositif de filtration d'air (10) selon la revendication 3, dans lequel les décrochements (20) des parois longitudinales (16) ont des positions longitudinales sensiblement identiques.

5. Dispositif de filtration d'air (10) selon la revendication 3 ou 4, dans lequel les parties haute (16A) et basse (16B) de chaque paroi (16) forment des moyens formant détrompeur.

6. Dispositif de filtration d'air (10) selon l'une quelconque des revendications précédentes, dans lequel la hauteur des plis (P) du média filtrant (12) est sensiblement constante, les lignes de pliage (14) se répartissant en des premières lignes de pliage sensiblement coplanaires alternant chacune avec des secondes lignes de pliage sensiblement coplanaires, décalées en hauteur par rapport aux premières lignes de pliage.

7. Dispositif de filtration d'air (10) selon l'une quelconque des revendications précédentes, **caractérisé en ce que** le média filtrant (12) comprend des moyens de filtration de particules et/ou de gaz.

## Claims

1. Air filtering device (10) comprising
- a filtering medium (12) extending in an accordion manner in such a way as to have plies (P, PE) of which each one is delimited by two adjacent spans of the filtering medium (12) converging towards a folding line (14) which extends in a transversal direction (T),
- two opposite longitudinal walls (16) for channelling air, between which the filtering medium (12) extends in the transversal direction, the two longitudinal walls (16) extending substantially in a longitudinal direction (L) orthogonal to the transversal direction (T),
- means (18) of fastening of the device with a housing box (11) of this device (10),
**characterised in that** the means of fastening (18) include at least one ply of the filtering medium (12), referred to as locking ply (PE), projecting the longitudinal walls (16) in a height-measuring direction (H) orthogonal to the longitudinal and transversal directions.

2. Air filtering device (10) according to claim 1, wherein the locking ply (PE) is located at a longitudinal end of the device (10).

3. Air filtering device (10) according to claim 1 or 2, wherein each longitudinal wall (16) comprises a detachment in height (20) separating two respectively high (16A) and low (168) portions of the longitudinal wall (16), with the locking ply (PE) projecting the low portion (16B) in the height-measuring direction (H).

4. Air filtering device (10) according to claim 3, wherein the detachments (20) of the longitudinal walls (16) have substantially identical longitudinal positions.

5. Air filtering device (10) according to claim 3 or 4, wherein the high (16A) and low (16B) portions of each wall (16) form means forming a full-proof device.

6. Air filtering device (10) according to any of the preceding claims, wherein the height of the plies (P) of the filtering medium (12) is substantially constant, the folding lines (14) being distributed in first folding lines that are substantially coplanar each alternating with second folding lines that are substantially coplanar, offset in height in relation to the first folding lines.

7. Air filtering device (10) according to any of the preceding claims, **characterised in that** the filtering medium (12) comprises means of filtering particles and/or gases.

## Patentansprüche

1. Luftfiltervorrichtung (10), umfassend:
- ein Filtermedium (12), das sich wie ein Akkordeon erstreckt, so dass es Falten (P, PE) aufweist, von denen jede von zwei benachbarten Seiten des Filtermediums (12) begrenzt ist, die in einer Falzlinie (14) zusammenlaufen, die sich in einer Querrichtung (T) erstreckt,
- zwei gegenüberliegende Längswände (16) der Luftdüse, zwischen denen sich das Filtermedium (12) in der Querrichtung erstreckt, wobei sich die zwei Längswände (16) im Wesentlichen in einer Längsrichtung (L) rechtwinklig zur Querrichtung (T) erstrecken,
- Mittel (18) zur Befestigung der Vorrichtung mit einem Gehäuse (11) zur Aufnahme dieser Vorrichtung (10),
**dadurch gekennzeichnet, dass** die Befestigungsmittel (18) mindestens eine Falte des Filtermediums (12), genannt Einklipsfalte (PE) umfassen, die aus den Längswänden (16) in einer Höhenmessrichtung (H) rechtwinklig zur Längs- und Querrichtung hervorspringt.

2. Luftfiltervorrichtung (10) nach Anspruch 1, in der sich die Einklipsfalte (PE) an einem Längsende der Vorrichtung (10) befindet.

3. Luftfiltervorrichtung (10) nach Anspruch 1 oder 2, in der jede Längswand (16) eine Höhenverschiebung (20) umfasst, die einen oberen (16A) bzw. unteren (16B) Teil der Längswand (16) trennt, wobei die Einklipsfalte (PE) aus dem unteren Teil (16B) in der Höhenmessrichtung (H) hervorspringt.

4. Luftfiltervorrichtung (10) nach Anspruch 3, in der die Verschiebungen (20) der Längswände (16) im Wesentlichen identische Längspositionen aufweisen.

5. Luftfiltervorrichtung (10) nach Anspruch 3 oder 4, in der der obere (16A) und der untere (16B) Teil jeder Wand (16) Mittel bildet, die eine Positionssicherung bilden.

6. Luftfiltervorrichtung (10) nach einem der vorhergehenden Ansprüche, in der die Höhe der Falten (P) des Filtermediums (12) im Wesentlichen konstant ist, wobei sich die Falzlinien (14) in erste, im Wesentlichen koplanare Falzlinien aufteilen, abwechselnd mit zweien, im Wesentlichen koplanaren Falzlinien, die in der Höhe bezüglich den ersten Falzlinien verschoben sind.

7. Luftfiltervorrichtung (10) nach einem der vorhergehenden Ansprüche, **dadurch gekennzeichnet, dass** das Filtermedium (12) Mittel zur Filterung von Partikeln und/oder von Gas umfasst.
